# EUROPÄISCHE PATENTSCHRIFT

(11) **EP 2 707 216 B1**
(45) Veröffentlichungstag und Bekanntmachung des Hinweises auf die Patenterteilung: **10.05.2017**
(21) Anmeldenummer: 12710245.7
(22) Anmeldetag: 20.03.2012
(51) Int. Cl.: B32B 3/10, B65D 5/74, B65D 75/58

(54) **VERBUNDFOLIE FÜR VERPACKUNGSBEHÄLTER, VERFAHREN ZUM HERSTELLEN EINER VERBUNDFOLIE SOWIE VERPACKUNGSBEHÄLTER**
COMPOSITE FILM FOR PACKAGING CONTAINERS, METHOD FOR PRODUCING A COMPOSITE FILM, AND PACKAGING CONTAINER
FEUILLE STRATIFIÉE POUR CONTENANT D'EMBALLAGE, PROCÉDÉ DE FABRICATION D'UNE FEUILLE STRATIFIÉE ET CONTENANT D'EMBALLAGE

(30) Priorität: 09.05.2011 DE 102011075481
(43) Veröffentlichungstag der Anmeldung: 19.03.2014
(73) Patentinhaber: Robert Bosch GmbH, 70442 Stuttgart (DE)
(72) Erfinder: EKENHORST, Dirk, 49076 Osnabrück (DE); MENARD, Rico, CH-9533 Kirchberg (CH)
(86) Internationale Anmeldenummer: PCT/EP2012/054906
(87) Internationale Veröffentlichungsnummer: WO 2012/152492

(56) Entgegenhaltungen:
- EP-A1- 1 182 144
- WO-A2-2007/127982
- GB-A- 2 154 200
- US-A1- 2003 128 899
- US-A1- 2005 175 800

## Beschreibung

### Stand der Technik

Die Erfindung betrifft eine Verbundfolie für Verpackungsbehälter nach dem Oberbegriff des Anspruchs 1. Ferner betrifft die Erfindung ein Verfahren zum Herstellen einer erfindungsgemäßen Verbundfolie sowie einen Verpackungsbehälter, der aus einer erfindungsgemäßen Verbundfolie hergestellt ist.

Eine Verbundfolie für Verpackungsbehälter nach dem Oberbegriff des Anspruchs 1 ist aus der WO96/19387A bekannt. Hierbei ist die Verbundfolie Teil eines Verpackungsbehälters, der eine Ausgießöffnung aufweist, über die im Inneren des Verpackungsbehälters befindliche Flüssigkeit aus dem Verpackungsbehälter entnommen werden kann. Um ein vereinfachtes Öffnen des Verpackungsbehälters im Bereich der Öffnungseinrichtung zu ermöglichen, ist es bei der bekannten Verbundfolie vorgesehen, diese auf der der Öffnungseinrichtung zugewandten Seite mit einem Schwächungsbereich zu versehen. Hierbei werden in der vorgenannten Schrift zwei Möglichkeiten beschrieben: Zum einen eine Schwächung über zwei, kreuzförmig zueinander angeordnete Schnitte, und zum anderen eine Reduktion der Dicke der Verbundfolie. Mittels beider Maßnahmen ist es möglich, den Verpackungsbehälter zum manuellen Durchstoßen bzw. Öffnen der Verbundfolie im Bereich der Öffnungseinrichtung zu schwächen, wobei während des Transports bzw. der Lagerung des Verpackungsbehälters die Verbundfolie jedoch intakt und somit die Haltbarkeit des in dem Verpackungsbehälter befindlichen Produkts gewährleistet ist. Darüber hinaus sind in der bekannten Schrift bereits Öffnungseinrichtungen angesprochen, die Schneiden aufweisen, die zum Durchtrennen der Verbundfolie dienen. Näheres im Zusammenhang mit der Beschreibung des angesprochenen Schwächungsbereichs ist jedoch der Schrift nicht entnehmbar.

### Offenbarung der Erfindung

Ausgehend von dem dargestellten Stand der Technik liegt der Erfindung die Aufgabe zugrunde, eine Verbundfolie für Verpackungsbehälter nach dem Oberbegriff des Anspruchs 1 derart auszubilden, dass sie in Zusammenwirkung mit einer Schneiden aufweisenden Öffnungseinrichtung zum Durchtrennen der Verbundfolie ein sicheres Durchtrennen der Verbundfolie mit relativ geringem Aufwand hinsichtlich der Geometrie der verwendeten Schneiden bzw. sonstiger Maßnahmen ermöglicht. Diese Aufgabe wird bei einer Verbundfolie für Verpackungsbehälter mit den Merkmalen des Anspruchs 1 erfindungsgemäß im Wesentlichen dadurch gelöst, dass der Schwächungsbereich auf der Seite der inneren Packstoffschicht des Folienverbundes angeordnet ist und als eine zumindest teilweise Reduzierung der Schichtdicke der inneren Packstoffschicht ausgebildet ist, wobei die insbesondere kreisförmige Form des Schwächungsbereichs der Anordnung der Schneiden angepasst ist, die als Bestandteil der Öffnungseinrichtung auf einem Teilkreisdurchmesser der Öffnungseinrichtung angeordnet sind.

Es hat sich bei Versuchen herausgestellt, dass die innere Packstoffschicht, die typischerweise aus Polyethylen (PE) besteht, für die Schneiden der Öffnungseinrichtung durch ihre Zähigkeit relativ schwierig zu durchtrennen ist. Es könnte nun zwar daran gedacht werden, das PE durch ein anderes Material zu ersetzen, jedoch eignet sich PE infolge seiner Siegelfähigkeit und aufgrund anderer Eigenschaften besonders gut als innere Packstoffschicht bei den angesprochenen Verpackungsbehältern bzw. Verbundfolien, insbesondere bei Schlauchbeutelpackungen. Eine andere Möglichkeit könnte darin bestehen, die Schneiden besonders scharf bzw. mit einer besonderen Geometrie zu gestalten, um das Durchtrennen bzw. Durchschneiden der inneren Packstoffschicht aus PE zu ermöglichen bzw. zu erleichtern. Dies würde jedoch zu einem erhöhten Kostenaufwand bei den Öffnungseinrichtungen führen. Durch die im Anspruch 1 beschriebene Verbundfolie ist es demgegenüber möglich, mit herkömmlichen Öffnungseinrichtungen bzw. Schneiden ein sicheres Durchtrennen des Folienverbundes zu erzielen.

Vorteilhafte Weiterbildungen der erfindungsgemäßen Verbundfolie für Verpackungsbehälter sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Wie bereits angesprochen besteht die innere Packstoffschicht vorzugsweise aus PE, wobei diese eine Schichtdicke zwischen 50µm und 200µm, insbesondere zwischen 60µm und 120µm aufweisen kann.

Die innere Packstoffschicht ist in ihrer Dicke im Schwächungsbereich reduziert, wobei es grundsätzlich möglich ist, die innere Packstoffschicht in dem Schwächungsbereich entweder (zumindest teilweise) zu entfernen, oder aber sie zu verdichten, wobei letztgenannte Maßnahme gegebenenfalls ebenfalls zu einem vereinfachten Durchtrennen der inneren Packstoffschicht durch die Schneiden der Öffnungseinrichtung führen kann.

Die Erfindung umfasst auch ein Verfahren zum Herstellen einer erfindungsgemäßen Verbundfolie. Dabei ist es erfindungsgemäß vorgesehen, dass der Schwächungsbereich mittels eines ambossartigen Werkzeugs erzeugt wird, das mit einer Druckkraft gegen die innere Packstoffschicht gedrückt wird, und das mit einem Ultraschallwerkzeug zusammenwirkt, das in Ausrichtung mit dem Werkzeug gegen die äußere Packstoffschicht der Verbundfolie angelegt wird. Ein derartiges Verfahren lässt sich im industriellen Maßstab relativ einfach und genau durchführen, und eignet sich daher insbesondere auch für Verpackungsbehälter, in denen Nahrungsmittel abgepackt bzw. abgefüllt sind, bei denen der Zutritt von Luft aus der Umgebung vermieden werden muss.

In einer konstruktiven Ausgestaltung des Werkzeugs wird vorgeschlagen, dass das Werkzeug einen ringförmigen Querschnitt aufweist, und dass der Durchmesser des Werkzeugs dem Teilkreisdurchmesser der Schneiden der Öffnungseinrichtung angepasst ist.

Ein weiterer Aspekt betrifft den Ort der Herstellung des Schwächungsbereichs. Hierzu wird bei einem ersten erfindungsgemäßen Verfahren vorgeschlagen, dass der Schwächungsbereich während des Herstellprozesses der Verbundfolie erzeugt wird. Mit anderen Worten gesagt bedeutet dies, dass die Schwächungsbereiche beim Packmittelhersteller im Fertigungsprozess der Verbundfolie erzeugt werden. Dies hat den Vorteil, dass die eigentliche Verpackungsmaschine zum Herstellen der Verpackungsbehälter bzw. zum Füllen der Verpackungsbehälter relativ einfach und kostengünstig aufgebaut werden kann, und keinerlei Prozesssicherungsmaßnahmen zur Kontrolle der ordnungsgemäßen Schwächungsbereiche benötigt werden.

In einer alternativen Ausgestaltung ist es jedoch auch möglich, dass die Schwächungsbereiche während des Herstellungsprozesses der Verpackungsbehälter, direkt an der Verpackungsmaschine, erzeugt werden. Dies hat den Vorteil, dass beispielsweise beim Wechsel des Formats der Öffnungseinrichtungen ein und dieselbe Verbundfolie weiterhin benutzt werden kann, wobei die Schwächungsbereiche jeweils formatabhängig direkt an der Verpackungsmaschine angepasst bzw. erzeugt werden.

Verpackungsbehälter, insbesondere Schlauchbeutelpackungen, die aus einer erfindungsgemäßen Verbundfolie hergestellt sind bzw. nach einem erfindungsgemäßen Verfahren zur Herstellung einer Verbundfolie hergestellt sind haben den Vorteil, dass sie von dem Bediener einfach und sicher geöffnet werden können, wobei während des Transports bzw. der Lagerung der Verpackungsbehälter das Packgut bzw. das in den Verpackungen befindliche Nahrungsmittel gut gegen Umwelteinflüsse geschützt ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Schnitt durch eine aus einer erfindungsgemäßen Verbundfolie hergestellten Schlauchbeutelpackung,
- Fig. 2: eine Öffnungseinrichtung, wie sie bei einer Schlauchbeutelpackung gemäß der Figur 1 verwendet wird, in perspektivischer Ansicht,
- Fig. 3: einen Teilbereich der Verbundfolie mit daran befestigter Öffnungseinrichtung in einem Längsschnitt und
- Fig. 4 und 5: die Verbundfolie gemäß Fig. 3 vor und nach der Bearbeitung der inneren Packstoffschicht, jeweils im Längsschnitt.

Gleiche Bauteile bzw. Bauteile mit gleicher Funktion sind in den Figuren mit den gleichen Bezugsziffern versehen.

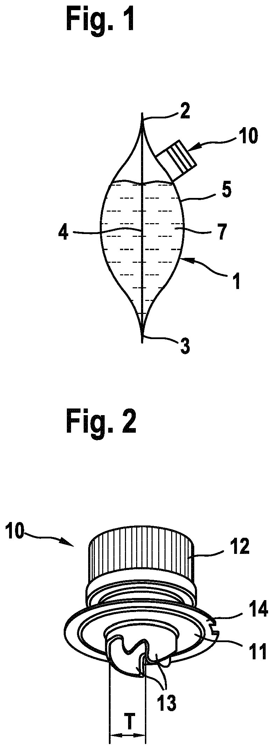

In der Fig. 1 ist ein Verpackungsbehälter in Form einer Schlauchbeutelpackung 1 dargestellt, wie sie auf einer so genannten Schlauchbeutelmaschine hergestellt und aus dem Stand der Technik bekannt ist. Die Schlauchbeutelpackung 1 besteht aus einer im Weiteren noch näher beschriebenen Verbundfolie 100 und weist eine obere Quernaht 2, eine untere Quernaht 3 sowie wenigstens eine Längsnaht 4 auf. An der Außenseite 5 der Schlauchbeutelpackung 1 ist eine Öffnungseinrichtung 10 befestigt, insbesondere durch einen Siegelvorgang, vorzugsweise durch eine Ultraschallsiegelung. Das Innere der Schlauchbeutelpackung 1 ist mit einem Füllgut 7, insbesondere mit einer Flüssigkeit wie Saft, Milch oder ähnlichem befüllt.

In der Fig. 2 ist die Öffnungseinrichtung 10 näher dargestellt. Die Öffnungseinrichtung 10 umfasst einen Schraubdeckelverschluss 12, der als separates Teil von der Öffnungseinrichtung 10 zur Entnahme des Füllguts 7 abgenommen werden kann. Ferner weist die insbesondere aus PP (Polypropylen) bestehende Öffnungseinrichtung 10 einen radial umlaufenden Befestigungsflansch 14 auf, der gegen die Außenseite 5 der Schlauchbeutelpackung 1 ansiegelbar ist. Aus der Unterseite 11 der Öffnungseinrichtung 10 ragen im Ausführungsbeispiel zwei, um 180° zueinander versetzt angeordnete Schneiden 13 heraus, die bei ungeöffneter Schlauchbeutelpackung 1 oberhalb der Unterseite 11 angeordnet sind, und die beim Aufschrauben des Schraubdeckelverschlusses 12 durch einen Mechanismus unter gleichzeitiger Drehung aus der Unterseite 11 herausragen, und dabei zur Ausbildung einer Durchgangsöffnung in der Schlauchbeutelpackung 1 die Verbundfolie 100 gezielt durchstoßen bzw. durchtrennen. Die Schneiden 13 sind auf einem Teilkreisdurchmesser T angeordnet.

Eine derartige Öffnungseinrichtung 10 ist an sich aus dem Stand der Technik bekannt, ebenso wie deren Schneiden 13 sowie der zum Betätigen der Schneiden 13 benötigte Mechanismus und werden daher, da insofern nicht erfindungswesentlich, im Weiteren nicht näher erläutert.

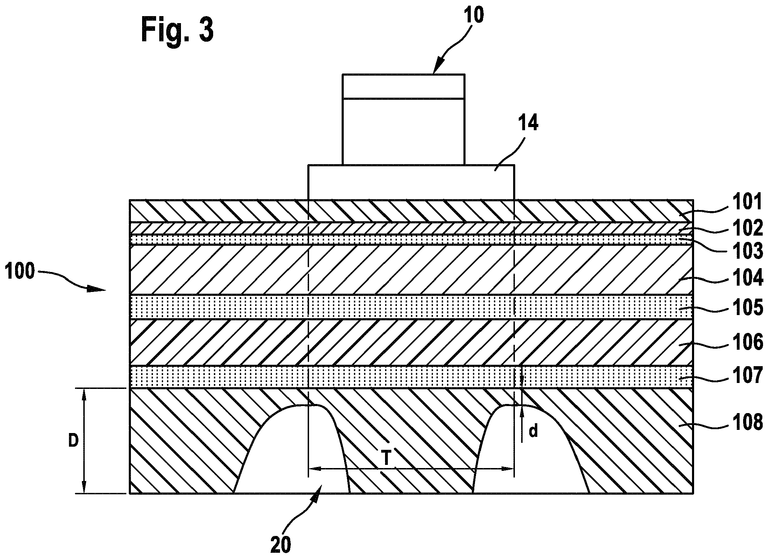

In der Fig. 3 ist ein Schnitt durch die Verbundfolie 100 im Bereich der mit der Verbundfolie 100 verbundenen Öffnungseinrichtung 10 dargestellt, wobei die Größe der Öffnungseinrichtung 10 im maßstäblich zu klein ist und lediglich mit Blick auf die Anordnung der Öffnungseinrichtung 10 zur Verbundfolie 100 zu sehen ist. Die Verbundfolie 100 besteht aus einer Vielzahl von Packstoffschichten. Die Außenseite der Schlauchbeutelpackung 1 wird dabei durch eine oPP-Schicht 101 (orientiertes Polypropylen) gebildet, an die sich eine Druckbildschicht 102 anschließt. Die Druckbildschicht 102 ist über eine Klebeschicht 103 mit einer Barriereschicht 104 verbunden. Die Barriereschicht 104 besteht beispielsweise aus Aluminium oder metallisiertem PET (Polyethylenterephthalat). An die Barriereschicht 104 schließt sich über eine weitere Klebeschicht 105 optional eine weitere Schicht 106 aus oPA (biaxial orientiertem Polyamid) an. Die Schicht 106 ist über eine Klebeschicht 107 mit der die Innenseite der Schlauchbeutelpackung 1 bindenden PE-Schicht 108 (Polyethylen) verbunden. Die PE-Schicht 108 weist eine Dicke D zwischen 50µm und 200µm, insbesondere zwischen 60µm und 120µm auf.

Ergänzend wird erwähnt, dass der beschriebene Schichtaufbau der Verbundfolie 100 lediglich beispielhaft ist und auf vielfältige Art und Weise durch Verwendung oder Weglassen einzelner Schichten verändert werden kann. Auch ist es möglich, auf die Klebeschichten 103, 105 und 107 gegebenenfalls zu verzichten und die einzelnen Schichten beispielsweise durch eine Extrusionskaschierung miteinander zu verbinden. Erfindungswesentlich ist lediglich, dass die die Außenseite 5 der Schlauchbeutelpackung 1 bildende oPP-Schicht 101 zur Verbindung mit der Öffnungseinrichtung 10 geeignet ist, während die innere PE-Schicht 108 zur Verarbeitung auf der angesprochenen Schlauchbeutelmaschine (heiß-) siegelfähig ausgebildet ist.

Erfindungsgemäß ist es vorgesehen, dass die (innere) PE-Schicht 108 im Bereich der anzubringenden Öffnungseinrichtung 10 mit einer im Ausführungsbeispiel ringförmigen Schwächungszone 20 ausgestattet ist. Die Schwächungszone 20 zeichnet sich dadurch aus, dass im Bereich der Schwächungszone 20 die ursprüngliche Dicke D der PE-Schicht 108 bis auf eine Dicke d reduziert ist. Im Extremfall kann es vorgesehen sein, dass zumindest die gesamte PE-Schicht 108 im Bereich der Schwächungszone 20 vollständig entfernt ist.

Die Reduzierung der Dicke in der Schwächungszone 20 erfolgt vorzugsweise durch Entfernen des Materials der PE-Schicht 108, alternativ gegebenenfalls durch eine Verdichtung der PE-Schicht 108 im Sinne einer Dickenreduzierung. Wesentlich dabei ist, dass der Bereich der reduzierten Dicke der PE-Schicht 108 in Überdeckung bzw. in Ausrichtung mit dem Teilkreisdurchmesser T der Schneiden 13 angeordnet ist, damit beim Betätigen der Schneiden 13 diese beim Auftreffen auf die PE-Schicht 108 nur noch eine PE-Schicht 108 mit reduzierter Dicke durchtrennen müssen.

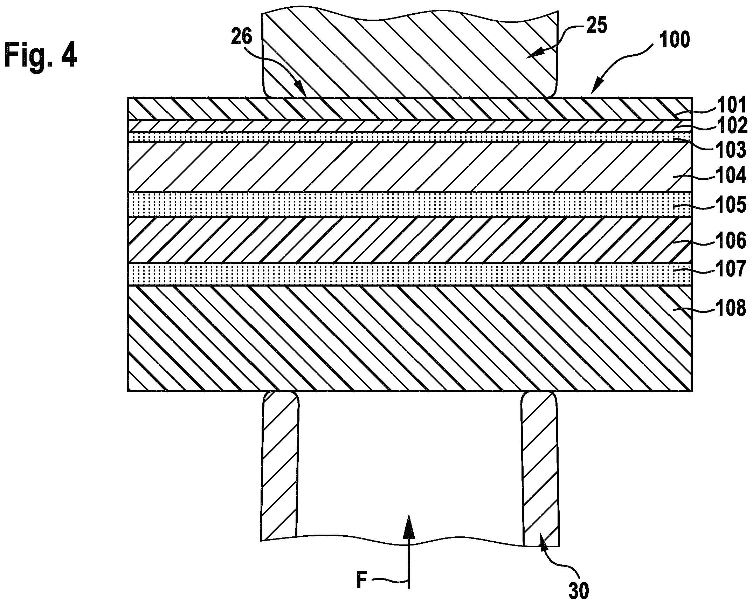

In der Fig. 4 ist die Verbundfolie 100 vor dem Ausbilden der Schwächungszone 20 dargestellt. Das Ausbilden der Schwächungszone 20 erfolgt bevorzugt mittels eines im Querschnitt ringförmigen Ambosses 30, der gegen die PE-Schicht 108 im Bereich der Schneiden 13 der Öffnungseinrichtung 10 mit einer Anpresskraft F gedrückt wird. Der mittlere Durchmesser des Ambosses 30 entspricht dabei dem Teilkreisdurchmesser T der Schneiden 13.

In Ausrichtung mit dem Amboss 30 wird von der äußeren oPP-Schicht 101 her eine Sonotrode 25 gegen die Verbundfolie 100 gedrückt, die ein vorzugsweise zylindrisch oder kegelstumpfförmig ausgebildetes Ende 26 aufweist. Die Sonotrode 25 ist mit einer nicht dargestellten Ultraschallquelle zumindest mittelbar gekoppelt und wird mit einer Frequenz von beispielsweise 30 Kilohertz oder 35 Kilohertz betrieben.

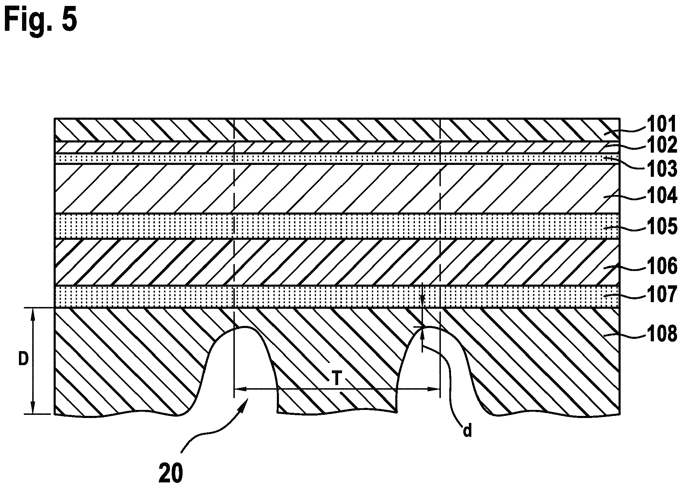

In der Fig. 5 ist der Zustand dargestellt, bei der in der Verbundfolie 100 die Schwächungszone 20 ausgebildet wurde. Man erkennt insbesondere, dass die Dicke der PE-Schicht 108 auf dem Teilkreisdurchmesser T gegenüber der (ursprünglichen) Dicke D deutlich reduziert ist. Dies erleichtert beim Betätigen der Öffnungseinrichtung 10 bzw. der Schneiden 13 ein Durchtrennen der PE-Schicht 108 durch die Schneiden 13.

Die Schwächungszone 20 kann beispielsweise bei einem Packstoffhersteller (der die Verbundfolie 100 herstellt) erzeugt werden, indem die Schwächungszonen 20 in gleichmäßigen Abständen entsprechend des Druckbildes bzw. der Größe der Schlauchbeutelpackungen 1 auf einer Verbundfolienbahn ausgebildet werden. Anschließend kann die als Packstoffrolle bevorratete Verbundfolie 100 zum Herstellen der Schlauchbeutelpackungen 1 an den Verpacker geliefert werden, der auf der angesprochenen Schlauchbeutelmaschine die Schlauchbeutelpackungen 1 formt und mit dem Füllgut 7 befüllt. Alternativ ist es jedoch auch möglich, die Einrichtung zur Ausbildung der Schwächungszone 20 direkt an der Schlauchbeutelmaschine, oder aber zumindest im Bereich der Verpackungsanlage beim Verpacker anzuordnen.

Die soweit beschriebene Verbundfolie 100 sowie die Schlauchbeutelverpackung 1 können in vielfältiger Art und Weise abgewandelt bzw. modifiziert werden, ohne vom Erfindungsgedanken abzuweichen. Dieser besteht in einer gezielten Schwächung der inneren Packstoffschicht der Schlauchbeutelpackung 1 zur Erleichterung des Durchtrennens der inneren Packstoffschicht mittels der Schneiden 13 der Öffnungseinrichtung 10.

## Patentansprüche

1. Verbundfolie (100) für Verpackungsbehälter (1), mit einem aus mehreren Packstoffschichten (101 bis 108) bestehenden Folienverbund, wobei eine innere Packstoffschicht (108) als heißsiegelfähige Schicht ausbildet und auf eine äußere Packstoffschicht (101) eine Öffnungseinrichtung (10) befestigt ist, insbesondere durch Aufsiegeln auf die äußere Packstoffschicht (101), und wobei die Packstoffschichten (101 bis 108) im Bereich der Öffnungseinrichtung (10) einen Schwächungsbereich (20) aufweisen,
**dadurch gekennzeichnet,**
**dass** der Schwächungsbereich (20) auf der Seite der inneren Packstoffschicht (108) angeordnet ist und als eine zumindest teilweise Reduzierung der Schichtdicke (D) der inneren Packstoffschicht (108) ausgebildet ist, wobei die insbesondere im Querschnitt ringförmige Form des Schwächungsbereichs (20) der Anordnung von Schneiden (13) angepasst ist, die als Bestandteil der Öffnungseinrichtung (10) auf einem Teilkreisdurchmesser (T) der Öffnungseinrichtung (10) angeordnet sind.

2. Verbundfolie nach Anspruch 1,
**dadurch gekennzeichnet,**
**dass** die innere Packstoffschicht (108) aus PE besteht und eine Schichtdicke zwischen 50µm und 200µm, insbesondere zwischen 60µm und 120µm aufweist.

3. Verbundfolie nach Anspruch 2,
**dadurch gekennzeichnet,**
**dass** die innere Packstoffschicht (108) im Schwächungsbereich (20) zumindest bis auf eine geringe Dicke (d) der inneren Packstoffschicht (108) entfernt oder verdichtet ist.

4. Verfahren zum Herstellen einer Verbundfolie (100) nach einem der Ansprüche 1 bis 3, bei dem die innere Packstoffschicht (108) in ihrer Schichtdicke zumindest teilweise reduziert wird,
**dadurch gekennzeichnet,**
**dass** der Schwächungsbereich (20) mittels eines Werkzeugs (30) erzeugt wird, das mit einer Druckkraft (F) gegen die innere Packstoffschicht (108) gedrückt wird, und das mit einem Ultraschallwerkzeug (25) zusammenwirkt, das in Ausrichtung mit dem Werkzeug (30) gegen die äußere Packstoffschicht (101) der Verbundfolie (100) angelegt wird.

5. Verfahren nach Anspruch 4,
**dadurch gekennzeichnet,**
**dass** das Werkzeug (30) einen ringförmigen Querschnitt aufweist, und dass der Durchmesser (A) des Werkzeugs (30) dem Teilkreisdurchmesser (T) der Schneiden (13) der Öffnungseinrichtung (10) angepasst ist.

6. Verfahren nach Anspruch 4 oder 5,
**dadurch gekennzeichnet,**
**dass** der Schwächungsbereich (20) während des Herstellungsprozesses der Verbundfolie (100) erzeugt wird.

7. Verfahren nach Anspruch 4 oder 5,
**dadurch gekennzeichnet,**
**dass** der Schwächungsbereich (100) im Bereich einer Verpackungsmaschine zur Herstellung und Befüllung von Verpackungsbehältern (1) erzeugt wird.

8. Verpackungsbehälter (1), insbesondere Schlauchbeutelpackung, hergestellt aus einer Verbundfolie (100) nach einem der Ansprüche 1 bis 4 oder einem Verfahren nach einem der Ansprüche 5 bis 7.

## Claims

1. Composite film (100) for packaging containers (1), having a film composite comprising a plurality of packaging material layers (101 to 108), an inner packaging material layer (108) being formed as a heat-sealable layer and an opening device (10) being fixed to an outer packaging material layer (101), in particular by sealing onto the outer packaging material layer (101), and the packaging material layers (101 to 108) having a weakening area (20) in the area of the opening device (10), **characterized in that**
the weakening area (20) is arranged on the side of the inner packaging material layer (108) and is formed as an at least partial reduction of the layer thickness (D) of the inner packaging material layer (108), wherein the shape of the weakening area (20), which is in particular annular in cross section, is matched to the arrangement of cutters (13) which are arranged as a constituent part of the opening device (10) on a partial circular diameter (T) of the opening device (10).

2. Composite film according to Claim 1,
**characterized in that**
the inner packaging material layer (108) consists of PE and has a layer thickness between 50 µm and 200 µm, in particular between 60 µm and 120 µm.

3. Composite film according to Claim 2,
**characterized in that**
the inner packaging material layer (108) in the weakening area (20) is removed or compressed at least to a lower thickness (d) of the inner packaging material layer (108).

4. Method for producing a composite film (100) according to one of Claims 1 to 3, in which the layer thickness of the inner packaging material layer (108) is at least partly reduced,
**characterized in that**
the weakening layer (20) is produced by means of a tool (30), which is pressed against the inner
packaging material layer (108) with a compressive force (F), and which interacts with an ultrasonic tool (25) which is placed against the outer packaging material layer (101) of the composite film (100) in alignment with the tool (30).

5. Method according to Claim 4,
**characterized in that**
the tool (30) has an annular cross section, and **in that** the diameter (A) of the tool (30) is matched to the partial circular diameter (T) of the cutters (13) of the opening device (10).

6. Method according to Claim 4 or 5,
**characterized in that**
the weakening area (20) is produced during the production process of the composite film (100).

7. Method according to Claim 4 or 5,
**characterized in that**
the weakening area (100) is produced in the area of a packaging machine for producing and filling packaging containers (1).

8. Packaging container (1), in particular tubular bag pack, produced from a composite film (100) according to one of Claims 1 to 4 or a method according to one of Claims 5 to 7.

## Revendications

1. Feuille stratifiée (100) pour contenant d'emballage (1), avec un composite de feuilles composé de plusieurs couches de matériau d'emballage (101 à 108), dans laquelle une couche intérieure de matériau d'emballage (108) est réalisée sous forme de couche soudable à chaud et un dispositif d'ouverture (10) est fixé sur une couche extérieure de matériau d'emballage (101), en particulier par soudage sur la couche extérieure de matériau d'emballage (101), et dans laquelle les couches de matériau d'emballage (101 à 108) présentent dans la région du dispositif d'ouverture (10) une zone de moindre résistance (20), **caractérisée en ce que** la zone de moindre résistance (20) est disposée sur le côté de la couche intérieure de matériau d'emballage (108) et est réalisée sous la forme d'une réduction au moins partielle de l'épaisseur de couche (D) de la couche intérieure de matériau d'emballage (108), dans laquelle la forme annulaire en particulier en section transversale de la zone de moindre résistance (20) est adaptée à l'agencement de couteaux (13), qui sont disposés sur un diamètre de cercle partiel (T) du dispositif d'ouverture (10) en tant que composant du dispositif d'ouverture (10).

2. Feuille stratifiée selon la revendication 1, **caractérisée en ce que** la couche intérieure de matériau d'emballage (108) se compose de PE et présente une épaisseur de couche comprise entre 50 µm et 200 µm, en particulier entre 60 µm et 120 µm.

3. Feuille stratifiée selon la revendication 2, **caractérisée en ce que** la couche intérieure de matériau d'emballage (108) est enlevée ou comprimée dans la zone de moindre résistance (20) au moins jusqu'à une faible épaisseur (d) de la couche intérieure de matériau d'emballage (108).

4. Procédé de fabrication d'une feuille stratifiée (100) selon l'une quelconque des revendications 1 à 3, dans lequel on réduit au moins en partie l'épaisseur de couche de la couche intérieure de matériau d'emballage (108), **caractérisé en ce que** l'on produit la zone de moindre résistance (20) au moyen d'un outil (30), que l'on applique avec une force de pression (F) contre la couche intérieure de matériau d'emballage (108) et qui coopère avec un outil à ultrasons (25), que l'on applique en alignement avec l'outil (30) contre la couche extérieure de matériau d'emballage (101) de la feuille stratifiée (100).

5. Procédé selon la revendication 4, **caractérisé en ce que** l'outil (30) présente une section transversale annulaire, et **en ce que** le diamètre (A) de l'outil (30) est adapté au diamètre de cercle partiel (T) des couteaux (13) du dispositif d'ouverture (10).

6. Procédé selon la revendication 4 ou 5, **caractérisé en ce que** l'on produit la zone de moindre résistance (20) pendant le processus de fabrication de la feuille stratifiée (100).

7. Procédé selon la revendication 4 ou 5, **caractérisé en ce que** l'on produit la zone de moindre résistance (100) dans la région d'une machine d'emballage pour la fabrication et le remplissage de contenants d'emballage (1).

8. Contenant d'emballage (1), en particulier emballage en sac tubulaire, fabriqué en une feuille stratifiée (100) selon l'une quelconque des revendications 1 à 4 ou par un procédé selon l'une quelconque des revendications 5 à 7.
